**Europäisches Patentamt**

**European Patent Office**

**Office européen des brevets**

(19)

(11) Numéro de publication : **0 197 976**
**B1**

(12) # FASCICULE DE BREVET EUROPÉEN

(45) Date de publication du fascicule du brevet :
**17.05.89**

(51) Int. Cl.⁴ : **A 01 G   9/10, A 01 C  11/04,**
**B 65 G  47/90**

(21) Numéro de dépôt : **85904830.8**

(22) Date de dépôt : **03.10.85**

(86) Numéro de dépôt international :
**PCT/FR 85/00274**

(87) Numéro de publication internationale :
**WO/8601975 (10.04.86 Gazette 86/08)**

(54) PROCEDE DE PREHENSION ET DE TRANSFERT DE PLANTS EN MOTTES.

(30) Priorité : **05.10.84 FR 8415317**

(43) Date de publication de la demande :
**22.10.86 Bulletin 86/43**

(45) Mention de la délivrance du brevet :
**17.05.89 Bulletin 89/20**

(84) Etats contractants désignés :
**AT BE CH DE FR GB IT LI LU NL SE**

(56) Documents cités :
**CH—A—   308 825**
**FR—A— 1 287 488**
**FR—A— 2 345 371**
**FR—A— 2 357 448**
**GB—A— 2 009 096**
**US—A— 3 460 277**

(73) Titulaire : **Germaine, Michel**
**3, Sente des Bûcherons**
**F-76350 Oissel (FR)**

(72) Inventeur : **Germaine, Michel**
**3, Sente des Bûcherons**
**F-76350 Oissel (FR)**

(74) Mandataire : **Casalonga, Axel et al**
**BUREAU D.A. CASALONGA OFFICE JOSSE & PETIT**
**Morassistrasse 8**
**D-8000 München 5 (DE)**

Jouve, 18, rue St-Denis, 75001 Paris, France

## Description

La présente invention se rapporte à un procédé et à un dispositif de préhension un à un et de transfert de plants en mottes contenus dans des godets multiples ou des plaques à alvéoles, en vue du rempotage ou de la plantation.

Notamment dans le domaine horticole et maraîcher, on a adopté depuis quelques années la technique de semis et de germination dans des mottes de terreau, tourbe ou matériaux analogues, contenues dans des godets multiples ou des plaques à alvéoles, plutôt que d'effectuer le semis et la germination dans des caissettes. En effet, chaque motte reçoit ainsi une semence et lorsque le plant est suffisamment développé, il est rempoté ou planté avec sa motte, ce qui réduit, voire supprime, les risques auxquels est exposé, lors du rempotage ou de la plantation, un plant à racines nues provenant d'une caissette de semis.

Toutefois, jusqu'à présent, le rempotage ou la plantation de tels plants en mottes nécessite l'extraction manuelle des plants en mottes hors des godets ou des plaques à alvéoles, ce qui entraîne des frais de main d'œuvre considérables et des risques d'endommagement ou de destruction des mottes relativement fragiles.

On connaît par ailleurs, par exemple par FR-A-1.287.488, des dispositifs de transplantation d'arbres avec leur motte, comprenant plusieurs lames tranchantes que l'on enfonce dans la terre, autour de l'arbre, en les faisant converger, pour découper dans la terre une motte entourant les racines et transporter l'arbre et le replanter avec cette motte, mais ces dispositifs ne sont pas utilisables ou transposables à la préhension de plants en mottes contenus dans des godets multiples ou plaques à alvéoles.

La présente invention a pour objet un procédé et un dispositif permettant de mécaniser la préhension et le transfert de plants en mottes contenus dans des godets multiples ou dans des plaques à alvéoles, cette préhension et ce transfert s'effectuant à cadence élevée, par des moyens simples, sans risques d'endommagement ou de destruction des plants et des mottes fragiles.

Suivant le procédé conforme à l'invention, on amène, au-dessus d'une motte à saisir, à une position de préhension, au moins deux aiguilles dont les extrémités libres convergent, de manière que leurs extrémités libres espacées, tournées vers le bas, se trouvent à faible distance verticalement au-dessus de la motte, entre le plant et le bord extérieur de la motte. On enfonce les aiguilles simultanément, suivant les axes de leurs extrémités libres, vers le bas dans la motte, de manière que leurs extrémités libres se rapprochent ou se croisent dans la motte, en dessous du plant. On déplace ensuite simultanément les aiguilles enfoncées dans la motte, sans changer leur position réciproque, de la position de préhension à une position de réception, la motte étant suspendue aux aiguilles. A la position de réception, on retire les aiguilles simultanément suivant les axes de leurs extrémités libres de la motte pour libérer cette dernière.

l'enfoncement, dans le produit à saisir, des aiguilles convergentes qui peuvent être très fines, n'endommage pas la motte et ne blesse pratiquement pas les radicelles du plant. Les aiguilles sont enfoncées dans la motte à distance horizontale les unes des autres, à l'extérieur du plant, de sorte que les pointes des aiguilles enfoncées dans la motte se rapprochent, voire se croisent, dans la motte à distance en dessous du plant.

Suivant un mode de réalisation, le dispositif pour la mise en œuvre du procédé conforme à l'invention comprend au moins deux aiguilles convergentes montées, leurs extrémités libres étant tournées vers le bas, de manière à pouvoir coulisser suivant leurs axes sur un support commun déplaçable entre une position de préhension et une position de réception. Ce dispositif comprend, en outre, des moyens de manœuvre pour faire coulisser les aiguilles simultanément suivant leurs axes, dans un sens vers le bas pour enfoncer les aiguilles dans la motte de manière que les extrémités libres des aiguilles se rapprochent, voire se croisent, et dans l'autre sens vers le haut, pour retirer les aiguilles de la motte.

Les moyens de manœuvre des aiguilles peuvent être de type quelconque, mais il s'est avéré particulièrement avantageux d'utiliser des vérins pneumatiques à double effet, les aiguilles étant fixées directement aux tiges de piston des vérins.

Il peut être avantageux que le dispositif comprenne, en outre, des moyens fixés sur le support pour servir de butée à la motte lors du retrait des aiguilles.

Ces moyens de butée peuvent être constitués, par exemple, par des tubes servant également de guide aux aiguilles.

Une autre possibilité consiste à utiliser, comme moyen de butée, un segment horizontal monté en position fixe sur le support de manière que, lorsque les aiguilles se trouvent en place au-dessus de la motte, il entoure le plant partiellement, à sa base. Dans ce cas, il est avantageux que le mouvement d'approche du dispositif vers le plant à saisir s'effectue avec le côté concave du segment tourné vers le plant.

Pour permettre l'adaptation du dispositif à des mottes et plants de tailles diverses, les aiguilles sont avantageusement montées de façon réglable en écartement et/ou en orientation sur le support.

Suivant un autre mode de réalisation, le dispositif pour la mise en œuvre du procédé conforme à l'invention comprend au moins deux aiguilles élastiques dont les extrémités inférieures libres sont montées coulissantes dans des guides convergeant vers le bas, solidaires d'un support commun déplaçable d'une position de préhension à une position de réception. Les extrémités supérieures de ces aiguilles sont solidaires d'une traverse commune mobile verticalement par rapport au support, de manière que les aiguilles soient courbées les unes vers les autres entre les guides et la traverse commune. Le dispositif comprend, par ailleurs, un organe de manœuvre pour déplacer la traverse, en position de préhension, vers le bas pour enfoncer les aiguilles dans la motte de manière que leurs extrémités libres se rapprochent ou se croisent dans la motte, et en position de réception vers le haut pour retirer les aiguilles de la motte.

L'avantage de ce mode de réalisation réside dans le faible encombrement dans le sens horizontal, ce qui permet de placer un grand nombre de dispositifs en ligne pour saisir et transférer simultanément toute une rangée de mottes.

Dans ce mode de réalisation, le moyen de manœuvre commun à toutes les aiguilles servant à saisir et à transférer une motte peut également être constitué avantageusement par un vérin pneumatique à double effet.

En se référant au dessin annexé, on va décrire ci-après plus en détail deux modes de réalisation illustratifs et non limitatifs d'un dispositif conforme à l'invention, pour la préhension de plants en mottes.

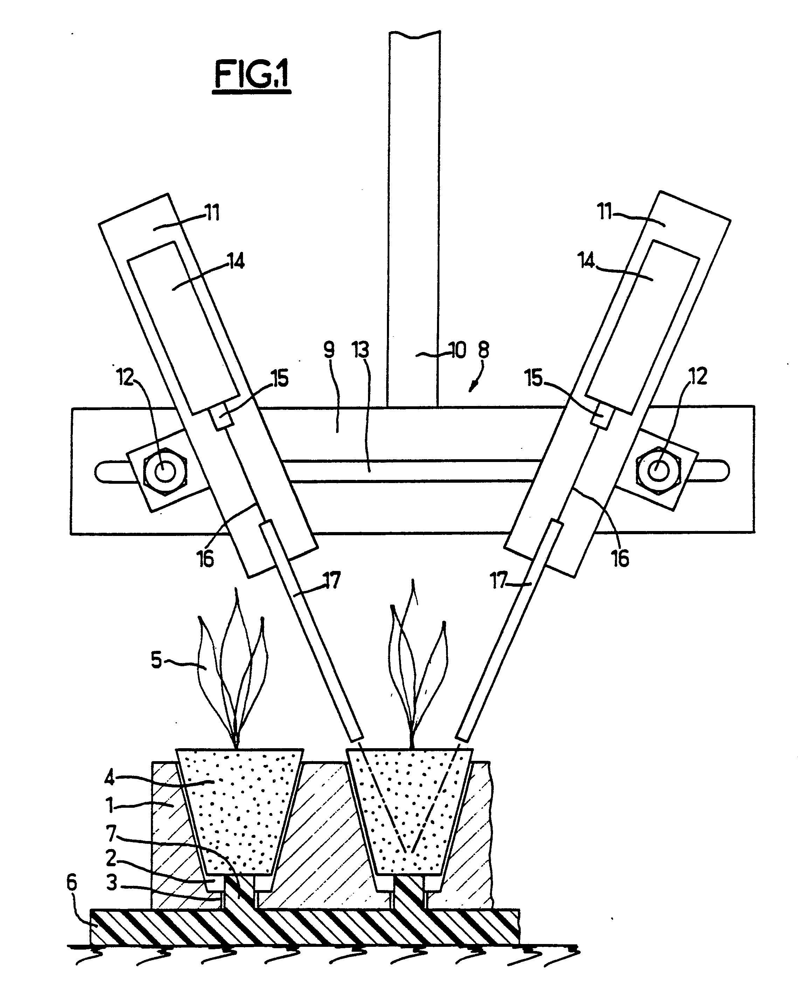

On reconnaît sur la figure 1 du dessin une plaque 1, par exemple en mousse de polystyrène, comportant un grand nombre d'alvéoles 2 de forme tronconique, s'évasant et débouchant vers le haut. Le fond de chaque alvéole 2 présente un trou de passage 3 de diamètre réduit.

De telles plaques à alvéoles sont bien connues dans le domaine horticole et maraîcher, chaque alvéole 2 recevant une motte de tourbe, terreau ou autre matériau servant de support de germination pour une semence et de support de croissance pour le plant résultant de la germination de cette semence.

Sur le dessin, on a représenté, dans chaque alvéole 2, une motte 4 portant un plant 5.

Les mottes 4 sont représentées en position légèrement soulevée dans les alvéoles 2, de sorte qu'elles se trouvent décollées des parois des alvéoles 2. Ce résultat a été obtenu de façon usuelle, par la mise en place de la plaque à alvéoles 1 sur une plaque d'éjection 6 comprenant des poussoirs 7 faisant saillie vers le haut dans la même disposition réciproque que les trous 3 des alvéoles 2 de la plaque 1. Pour décoller les mottes 4 des parois des alvéoles 2, il suffit donc de placer la plaque 1 avec les mottes 4 sur la plaque 6 et de l'appuyer sur cette dernière pour que les poussoirs 7 de la plaque 6 soulèvent quelque peu les mottes 4.

L'extraction des mottes 4 de la plaque 1 s'effectue à l'aide d'un dispositif de préhension et de transfert 8 susceptible d'être amené au-dessus de chaque motte 4. Le dispositif 8 comprend une traverse horizontale 9 solidaire d'un support 10 vertical monté sur un système non représenté de translation horizontale et verticale (mobilité suivant trois axes).

Au voisinage de chaque extrémité de la traverse 9 est fixée une platine 11, les platines 11 étant réglables quant à leur écartement réciproque et à leur orientation. La fixation des platines 11 sur la traverse 9 s'effectue à l'aide de boulons 12 passant dans une lumière 13 de la traverse 9.

Chaque platine 11 porte un vérin pneumatique 14 à double effet, les deux vérins 14 étant alimentés en commun. La tige de piston 15 de chaque vérin 14 est prolongée par une aiguille 16 s'étendant dans la direction de déplacement de la tige de piston 15. Chaque aiguille 16 est guidée dans un tube 17 fixé en porte-à-faux à la platine 11 à une distance suffisante du vérin 14 pour ne pas gêner le mouvement de la tige de piston 15. Il y a lieu de noter que la longueur du tube de guidage 17 est telle qu'en position de rétraction de la tige de piston 15, l'extrémité libre de l'aiguille 16 se trouve légèrement en retrait à l'intérieur du tube 17.

Les deux platines 11 étant immobilisées sur la traverse 9 de manière que les deux aiguilles 16 convergent vers le bas et que les extrémités libres des deux tubes de guidage 17 se trouvent à une distance réciproque légèrement inférieure au diamètre supérieur des alvéoles 2 de la plaque 1, on amène le dispositif 8 au-dessus d'une motte 4 à saisir de manière que les extrémités libres des deux tubes 17 se trouvent, de part et d'autre du plant 5, à faible distance au-dessus de la motte 4. Par alimentation des deux vérins 14, on enfonce les deux aiguilles 16 simultanément dans la motte 4, comme indiqué en traits mixtes sur le dessin, de sorte que les extrémités libres des deux aiguilles 16 se rapprochent. Ensuite, tout en maintenant les deux aiguilles 16 dans cette position réciproque d'enfoncement, on déplace l'ensemble du dispositif 8 vers le haut, de sorte que la motte 4 suspendue aux aiguilles 16 se trouve retirée vers le haut de son alvéole 2, et on transfère la motte 4 à un emplacement de réception, par exemple en vue de son rempotage ou de sa plantation.

Lorsque la motte 4 suspendue aux aiguilles 16 du dispositif 8 a été amenée par ce dernier à l'emplacement de réception, on alimente en sens inverse les deux vérins 14, de sorte que les deux aiguilles 16 se retirent de la motte 4 et libèrent cette dernière. Les deux tubes de guidage 17 dans lesquels sont retirées les aiguilles 16, servent de butée pour empêcher la motte ou une partie de la motte de rester accrochée à une aiguille 16.

Après libération de la motte 4 transférée, on ramène le dispositif 8 en position de préhension au-dessus d'une autre motte 4 contenue dans la plaque à alvéoles 1, et on saisit et transfère cette autre motte à son emplacement de réception de la manière décrite précédemment.

Il convient de noter que le nombre des aiguilles 16 peut être supérieur à deux, selon la nature et la taille des produits à saisir.

Les tubes de guidage 17 pour les aiguilles 16 pourraient également être choisis plus courts, ou même supprimés, auquel cas il pourrait être avantageux de prévoir, sur la traverse 9, d'autres moyens de butée pour empêcher la motte ou une partie de la motte de suivre une aiguille lors de l'extraction de ces dernières. Un tel moyen de butée pourrait être, par exemple, un segment horizontal qui, lorsque le dispositif 8 est en position de préhension au-dessus d'une motte 4, entoure le plant partiellement, à sa base.

Les vérins 14 pourraient être remplacés par tout autre moyen permettant de manœuvrer simultanément les aiguilles 16 en va-et-vient suivant leurs axes.

L'écartement et l'inclinaison des aiguilles peuvent être choisis à volonté en fonction de la motte à saisir. Il importe cependant que les aiguilles convergent puisque c'est cette inclinaison réciproque des aiguilles qui permet une préhension sûre de la motte.

Bien entendu, il serait possible de monter plusieurs jeux d'aiguilles sur un même support pour pouvoir saisir et transférer plusieurs mottes simultanément.

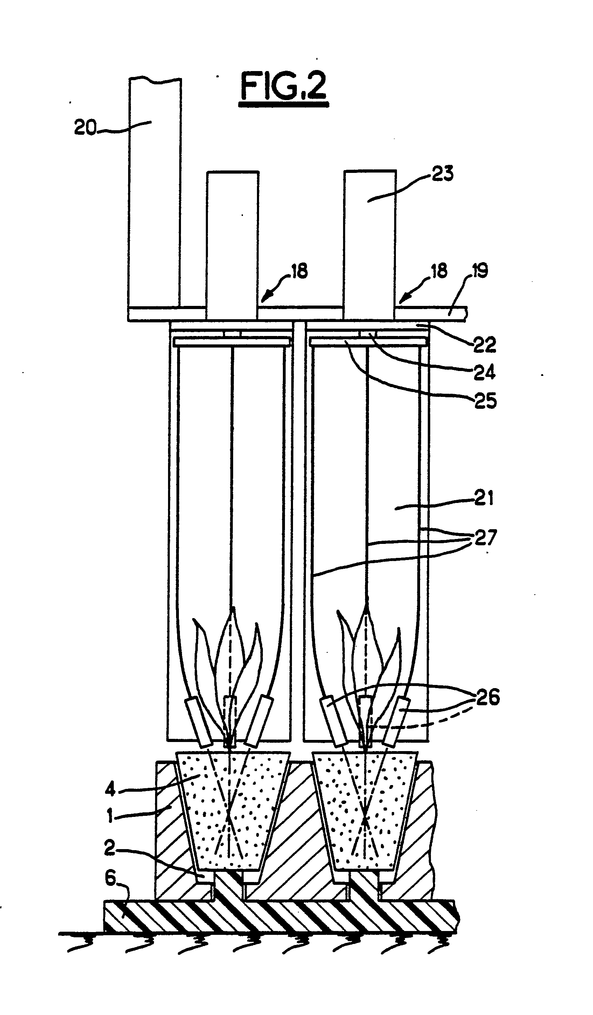

Dans le mode de réalisation suivant la figure 2, on a représenté côte à côte deux parmi un grand nombre de dispositifs de préhension et de transfert 18 destinés à saisir et à transférer simultanément les mottes 4 contenues dans une rangée d'alvéoles 2 d'une plaque 1, les mottes 4 étant décollées par une plaque d'éjection 6. Les dispositifs 18 sont montés côte à côte sur une traverse 19 horizontale solidaire de supports verticaux 20 (dont un seul est représenté). La traverse 19 peut ainsi être animée d'un mouvement de translation vertical (nécessaire pour retirer les mottes 4 de la plaque 1) ainsi que d'autres mouvements nécessaires pour amener les mottes 4 de la plaque 1 à un emplacement de réception.

Chaque dispositif 18 comprend un support 21 fixé en position verticale à la traverse 19. Le support 21 qui peut être constitué par exemple par un tronçon de cornière comporte à son extrémité supérieure une platine horizontale 22 sur laquelle est fixé le cylindre 23 d'un vérin pneumatique à double effet dont la tige de piston 24 traverse la platine 22. A l'extrémité inférieure de la tige de piston 24 est fixée une traverse 25 mobile verticalement sous l'action du vérin en étant guidée sur le support 21.

A son extrémité inférieure, le support 21 porte plusieurs tubes de guidage 26 convergeant vers le bas, ces tubes 26 étant au nombre de trois dans l'exemple représenté, et étant disposés l'un au fond de la cornière 21 formant le support, et les deux autres aux extrémités libres des deux ailes de la cornière. Les trois tubes 26 servent de guide aux extrémités inférieures de trois aiguilles 27 élastiques dont les extrémités supérieures sont fixées à la traverse 25 de telle manière que les aiguilles 27 qui sortent, en divergeant, vers le haut des tubes 26, soient incurvées pour s'étendre ensuite jusqu'à la traverse 25 dans des positions sensiblement parallèles.

Les aiguilles 27 sont constituées de préférence par du fil en acier à ressort, par exemple de la corde à piano.

Dans cet exemple de réalisation, les extrémités inférieures des aiguilles 27 sont relativement rapprochées les unes des autres, avant enfoncement dans la motte 4. Il est donc possible de laisser les aiguilles se croiser dans la motte 4, après enfoncement dans cette dernière.

Il va de soi qu'au lieu d'utiliser un vérin 22, 23 pour manœuvrer les aiguilles 27 de chaque dispositif 18, il serait également possible de commander les traverses 25 de tous les dispositifs 18 d'une rangée par un vérin unique.

Afin d'éviter tout risque de blessure du plant 5, il est avantageux, dans les deux modes de réalisation, d'opérer la mise en position du dispositif 8, 18 par rapport au plant 5 en deux phases, à savoir d'abord une phase de descente du dispositif 8, 18 en avant du plant 5, suivie d'une phase d'approche horizontale par laquelle le plant 5 est amené entre les aiguilles. Ce mouvement d'approche horizontale peut se faire par translation horizontale, soit du dispositif 8, 18 par rapport au plant 5, soit du plant 5 par rapport au dispositif 8, 18.

**Revendications**

1. Procédé de préhension et de transfert de plants en mottes contenus dans des godets multiples ou dans des plaques à alvéoles, en vue du rempotage ou de la plantation, caractérisé par le fait qu'on amène, au-dessus d'une motte à saisir, à une position de préhension, au moins deux aiguilles convergentes de manière que leurs extrémités libres, tournées vers le bas, se trouvent à faible distance verticalement au-dessus de la motte, entre le plant et le bord extérieur de la motte, qu'on enfonce les aiguilles simultanément suivant leurs axes vers le bas dans la motte, qu'on déplace les aiguilles simultanément, sans changer leur position réciproque, de la position de préhension à une position de réception, la motte étant suspendue aux aiguilles, et qu'on retire les aiguilles simultanément suivant leurs axes de la motte pour libérer cette dernière.

2. Dispositif pour la mise en œuvre du procédé suivant la revendication 1, caractérisé par le fait qu'il comprend au moins deux aiguilles convergentes (16) montées, leurs extrémités libres étant tournées vers le bas, de manière à pouvoir coulisser suivant leurs axes sur un support commun déplaçable d'une position de préhension à une position de réception, et des moyens de manœuvre (14, 15) pour déplacer les aiguilles (16) simultanément suivant leurs axes, dans un sens vers le bas pour enfoncer les aiguilles dans la motte de manière que leurs extrémités libres se rapprochent ou se croisent, et dans l'autre sens vers le haut, pour retirer les aiguilles de la motte.

3. Dispositif suivant la revendication 2, caractérisé par le fait qu'il comprend, en outre, des moyens (17) fixés sur le support (9) pour servir de butée à la motte lors du retrait des aiguilles.

4. Dispositif suivant la revendication 3, caractérisé par le fait que les moyens de butée sont constitués par des tubes (17) servant également de guide aux aiguilles.

5. Dispositif suivant l'une quelconque des revendications 2 à 4, caractérisé par le fait que les aiguilles (16) sont montées de façon réglable en écartement et/ou en orientation sur le support (9).

6. Dispositif suivant l'une quelconque des revendications 2 à 5, caractérisé par le fait que les moyens de manœuvre (14, 15) sont constitués par des vérins pneumatiques à double effet, les aiguilles (16) étant fixées directement aux tiges de piston (15) des vérins.

7. Dispositif pour la mise en œuvre du procédé suivant la revendication 1, caractérisé par le fait qu'il comprend au moins deux aiguilles élastiques (27) dont les extrémités inférieures libres sont montées coulissantes dans des guides (26) convergeant vers le bas, solidaires d'un support (21) commun, déplaçable d'une position de préhension à une position de réception, et dont les extrémités supérieures sont solidaires d'une traverse commune (25) mobile verticalement par rapport au support (21) de manière que les aiguilles soient courbées les unes vers les autres entre les guides (26) et la traverse commune (25), ainsi qu'un moyen de manœuvre (22, 23) pour déplacer la traverse en position de préhension vers le bas pour enfoncer les aiguilles dans la motte de manière que leurs extrémités libres se rapprochent ou se croisent dans la motte, et en position de réception vers le haut pour retirer les aiguilles de la motte.

8. Dispositif suivant la revendication 7, caractérisé par le fait que ledit moyen de manœuvre (22, 23) est constitué par un vérin pneumatique à double effet.

## Claims

1. Method of grasping and transferring plants in clods of earth, contained in multiple trays or in pocketed plates for the purpose of repotting or planting, characterized in that at least two convergent needles are brought above a clod to be picked up, into a grasping position, in such a way that their free ends facing downwards are at a short distance vertically above the clod between the plant and the outer edge of the clod, in that the needles are inserted downwards into the clod simultaneously along their axes, in that the needles, without changing their mutual position, are transferred from the grasping position to a receiving position, the clod being suspended on the needles, and in that the needles are withdrawn from the clod simultaneously along their axes in order to release the clod.

2. Device for carrying out the method according to Claim 1, characterized in that it comprises at least two convergent needles (16) mounted with their free ends facing downwards, slidable along their axes on a common support (9) which can be transferred from a grasping position to a receiving position, and actuating means (14, 15) for shifting the needles (16) simultaneously along their axes in a downward direction, in order to insert the needles into the clod in such a way that their free ends approach one another or intersect, and in the other upward direction, in order to withdraw the needles from the clod.

3. Device according to Claim 2, characterized in that it also comprises means (17) fastened to the support (9) and intended for serving as a stop for the clod during the withdrawal of the needles.

4. Device according to Claim 3, characterized in that the stop means consist of tubes (17) also serving as a guide for the needles.

5. Device according to any one of Claims 2 to 4, characterized in that the needles (16) are mounted on the support (9) adjustably in terms of mutual spacing and/or orientation.

6. Device according to any one of Claims 2 to 5, characterized in that the actuating means (14, 15) consist of double-acting pneumatic jacks, the needles (16) being fastened directly to the piston rods (15) of the jacks.

7. Device for carrying out the method according to Claim 1, characterized in that it comprises at least two elastic needles (27), the free lower ends of which are mounted slidably in downward converging guides (26) fixed to a comon support (21) which can be transferred from a grasping position to a receiving position, and the upper ends of which are fixed to a common crossmember (25) movable vertically relative to the support (21), in such a way that the needles are curved towards one another between the guides (26) and the common crossmember (25), and an actuating means (22, 23) for shifting the crossmember downwards at the grasping position, in order to insert the needle into the clod in such a way that their free ends approach one another or intersect in the clod, and upwards at the receiving position, in order to withdraw the needles from the clod.

8. Device according to Claim 7, characterized in that the said actuating means (22, 23) consists of a double acting pneumatic jack.

## Patentansprüche

1. Verfahren zum Erfassen und Versetzen von Pflanzen in Erdballen enthalten in Mehrfachtöpfen oder in Zellenplatten, zwecks Umtopfen oder Einpflanzen dadurch gekennzeichnet, daß man wenigstens zwei konvergierende Nadeln in eine Greifstellung oberhalb des zu erfassenden Erdballens bringt, sodaß ihre nach unten gewandten freien Enden sich zwischen der Pflanze und dem Aussenrand des Erdballens in kurem Abstand senkrecht oberalb des Erdballens befinden, daß man die beiden Nadeln gleichzeitig entlang ihren Achsen nach unten in den Erdballen sticht, daß man die Nadeln gleichzeitig, ohne ihre Lage zueinander zu verändern, aus der Greifstellung in eine Empfangsstellung bringt, wobei der Erdballen an den Nadeln hängt, und daß man die Nadeln gleichzeitig entlang ihren Achsen wieder aus dem Erdballen herauszieht, um diesen freizugeben.

2. Vorrichtung zur Durchführung des Verfahrens gemäß Anspruch 1, gekennzeichnet durch wenigstens zwei konvergierende Nadeln (16), welche mit ihren freien Enden nach unten gewandt so gelagert sind, daß sie entlang ihren Achsen auf einem gemeinsamen Träger (9) gleiten können, der aus einer Greifstellung in eine Empfangsstellung bewegbar ist, sowie durch Betätigungsmittel (14, 15), um die Nadeln (16) gleichzeitig entlang ihren Achsen in der einen Richtung nach unten zu bewegen, um die Nadeln in den Erdballen zu stechen, sodaß ihre freien Enden sich nähern oder überkreuzen, und in der umgekehrten Richtung nach oben zu bewegen, um die Nadeln aus dem Erdballen zu ziehen.

3. Vorrichtung gemäß Anspruch 2, dadurch gekennzeichnet, daß sie ferner auf dem Halter (9) befestigte Mittel (17) enthält, die beim Herausziehen der Nadeln als Anschlag für den Erdballen dienen.

4. Vorrichtung gemäß Anspruch 3, dadurch gekennzeichnet, daß die Anchlagmittel aus Röhren (17) bestehen, die auch als Führung für die Nadeln dienen.

5. Vorrichtung gemäß einem beliebigen der Ansprüche 2 bis 4, dadurch gekennzeichnet, daß die Nadeln nach Abstand und/oder Richtung einstellbar auf dem Halter montiert sind.

6. Vorrichtung gemäß einem beliebigen der Ansprüche 2 bis 5, dadurch gekennzeichnet, daß die Betätigungsmittel (14, 15) aus doppelt wirkenden Druckluftzylindern bestehen, wobei die Nadeln (16) unmittelbar an den Kolbenstangen (15) der Zylinder befestigt sind.

7. Vorrichtung zur Durchführung des Verfahrens gemäß Anspruch 1, gekennzeichnet durch wenigstens zwei elastische Nadeln (27) deren untere freie Enden in Führungen (26) gleitend gelagert sind, die nach unten konvergieren und an einem gemeinsamen Halter (21) befestigt sind, der aus einer Greifstellung in eine Empfangsstellung bewegbar ist, und deren obere Enden an einer gemeinsamen Traverse (25) befestigt sind, die senkrecht zum Halter (21) bewegbar ist, sodaß die Nadeln zwischen den Führungen (26) und der gemeinsamen Traverse (25) zueinander gekrümmt sind, sowie durch ein Betätigungsmittel (22, 23) zum Verschieben der Traverse nach unten in die Greifstellung, um die Nadeln in den Erdballen zu stechen, sodaß ihre freien Enden sich im Erdballen annähern oder überkreuzen, und nach oben in die Empfangsstellung, um die Nadeln wieder aus dem Erdballen herauszuziehen.

8. Vorrichtung gemäß dem Anspruch 7, dadurch gekennzeichnet, daß das genannte Betätigungsmittel (22, 23) aus einem doppelt wirkenden Druckluftzylinder besteht.

## FIG.1

# FIG.2